# EUROPÄISCHE PATENTANMELDUNG

(11) **EP 0 522 187 A1**
(43) Veröffentlichungstag der Anmeldung: **13.01.1993**
(21) Anmeldenummer: 91111350.4
(22) Anmeldetag: 08.07.1991
(51) Int. Cl.: H02H 3/33

(54) **Fehlerstromschutzschalter**

(71) Anmelder: SIEMENS AKTIENGESELLSCHAFT, D-80333 München (DE)
(72) Erfinder: Lehner, Gerald, Dipl.-Ing., D-8407 Obertraubling (DE); Schmid, Reinhard, Dipl.-Ing., D-8400 Regensburg (DE); Solleder, Reinhard, Dipl.-Ing., D-8417 Hainsacker (DE)

(57) **Zusammenfassung**

Fehlerstromschutzschalter mit einem Summenstromwandler, in dessen Sekundärkreis eine Auslöseeinrichtung (2) angeordnet ist, die mit einem Schaltschloß in Eingriffverbindung steht, das auf Schaltkontakte in zu überwachenden Leitungen einwirkt, wobei zur Vermeidung von überspannungsbedingten Fehlauslösungen infolge von überspannungsbedingten Stoßströmen die Auslöseeinrichtung (2) durch einen ersten spannungsabhängigen Widerstand (3) überbrückt ist, dessen Widerstand eine solche Charakteristik aufweist, daß oberhalb einer Schwelle, mit steigender Spannung sein Widerstand sinkt, daß insbesondere im Auslösekreis ein oder mehrere Kondensatoren angeordnet sind, die auf Leistungsanpassung oder Pulsstromsensitivität abgestimmt sind, wobei ein zusätzlicher weiterer spannungsabhängiger Widerstand (7) parallel zur Auslöseeinrichtung (2) eingeschaltet ist, dessen Ansprechspannung so gewählt ist, daß sie oberhalb der des ersten spannungsabhängigen Widerstands (3) liegt.

Durch die somit realisierte "kalte Redundanz" wird ein besonders zuverlässiger Schutz aller Bauelemente des Auslösekreises gegen überspannungsbedingte Schädigungen erreicht.

## Beschreibung

Die Erfindung bezieht sich auf einen Fehlerstromschutzschalter mit einem Summenstromwandler, in dessen Sekundärkreis eine Auslöseeinrichtung angeordnet ist, die mit einem Schaltschloß in Eingriffverbindung steht, das auf Schaltkontakte in zu überwachenden Leitungen einwirkt. Derartige Fehlerstromschutzschalter sind netzspannungsunabhängig. Zur Vermeidung von Fehlauslösungen infolge von überspannungsbedingten Stoßströmen ist es bekannt, die Auslöseeinrichtung durch einen Spannungsabhängigen Widerstand zu beschalten, dessen Widerstand eine solche Charakteristik aufweist, daß oberhalb einer Schwelle, mit steigender Spannung sein Widerstand sinkt (EP-B1-0 106 045). Hierdurch wird die Stoßfestigkeit des Fehlerstromschutzschalters sichergestellt, wobei die Auslöseeinrichtung auch bei hohen Stoßströmen funktionstüchtig bleibt.

Es ist auch bekannt und inzwischen üblich, einen netzspannungsunabhängigen Fehlerstromschutzschalter dadurch auch auf Fehlerströme in Form von Pulsströmen empfindlich zu machen, daß ein Kondensator in bestimmter Abstimmung vorgesehen wird (DE-C-2 036 497).

Fehlerstromschutzschalter der geschilderten Technologie erfordern üblicherweise in ihrem Auslösekreis, der die Sekundärwicklung des Summenstromwandlers und die Erregerwicklung der Auslöseeinrichtung umfaßt, eine bestimmte Windungsanzahl und damit einen bestimmten ohmschen Widerstand, um die Auslösung in der Praxis sicherzustellen. Dadurch sind mit verhältnismäßig dünnen Drähten verhältnismäßig viele Windungen aufzubringen, so daß eine bestimmte Restgefahr verbleibt, daß Windungsbrüche auftreten oder die für die Erregung erforderliche Spannung durch Windungskurzschlüsse vermindert wird.

Der Erfindung liegt die Aufgabe zugrunde, einen Fehlerstromschutzschalter der geschilderten Art zu entwickeln, dessen Ansprechsicherheit einerseits erhöht wird und der andererseits vor Fehlauslösungen besonders geschützt ist.

Die geschilderte Aufgabe wird nach der Erfindung durch einen Fehlerstromsschutzschalter nach Patentanspruch 1 gelöst. Danach ist ein zusätzlicher weiterer spannungsabhängiger Widerstand parallel zur Auslöseeinrichtung eingeschaltet, dessen Ansprechspannung so gewählt ist, daß sie oberhalb der des ersten spannungsabhängigen Widerstands liegt. Der zusätzliche weitere spannungsabhängige Widerstand übernimmt dann, wenn der erste spannungsabhängige Widerstand durch Überbeanspruchung, Alterung oder Unterbrechung unwirksam wird, den Schutz des Kondensators und der Bauteile gegen Überspannung, wobei auch im Fall des Auftretens von hohen Stoßströmen die Funktion der Auslöseeinrichtung sichergestellt bleibt. Man kann hier von einer sogenannten kalten Redundanz sprechen. Dies kann bei niederohmigen wie hochohmigen Auslösekreisen zum Tragen kommen. Der Auslösekreis kann also niederohmig mit wenigen Windungen und dickerem bruchsicherem Draht ausgeführt werden. Der weitere spannungsabhängige Widerstand ermöglicht es, den Kondensator für die Pulsstromempfindlichkeit trotz eines niederohmigen Auslösekreises verhältnismäßig klein auszuführen und an der Grenze seiner Überspannungssicherheit zu betreiben, da er im Regelfall durch den ersten spannungsabhängigen Widerstand geschützt und einsatzfähig bleibt.

Wenn der erste spannungsabhängige Widerstand durch eine Unterbrechung ausfällt, ist zwar der Fehlerstromschutzschalter nicht mehr stoßstromfest, jedoch sind die Bauteile des Auslösekreises gegen überspannungsbedingte Schädigungen weiter geschützt, so daß der Fehlerstromschutzschalter uneingeschränkt funktionstüchtig bleibt. Wenn nach Ausfall des ersten spannungsabhängigen Widerstands der weitere spannungsabhängige Widerstand den Schutz des Kondensators übernimmt, können zwar Stoßströme zu Fehlauslösungen führen, die Empfindlichkeit gegen Puls- und Wechselfehlerströme bleibt jedoch erhalten.

Der erste spannungsabhängige Widerstand kann beispielsweise in der Praxis durch zwei antiparallele Dioden oder einen Varistor gebildet werden, wie es an sich bekannt ist (EP-B1-0 106 045, Anspruch 5).

Der Fehlerstromschutzschalter kann durch einen Kondensator parallel zur Auslöseeinrichtung mit einem Tiefpaß versehen werden, der die Störfestigkeit und somit die Sicherheit gegen höher frequente Fehlauslösungen weiter erhöht.

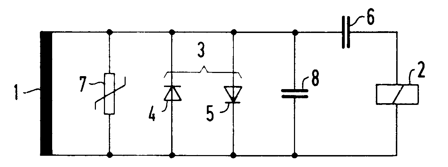

Die Erfindung soll nun anhand eines in der Zeichnung grob schematisch wiedergegebenen Ausführungsbeispiels näher erläutert werden:
Der Fehlerstromschutzschalter arbeitet mit einem Summenstromwandler, dessen Sekundärwicklung 1 mit einer Auslöseeinrichtung 2, beispielsweise einem Haltemagneten, verbunden ist. Ein erster spannungsabhängiger Widerstand 3 wird beispielsweise durch zwei antiparallele Dioden 4 und 5 gebildet; er überbrückt die Auslöseeinrichtung 2, bzw. er ist parallel zu dieser angeordnet. Ein Kondensator 6 für die Pulsstromempfindlichkeit ist in Reihe zur Auslöseeinrichtung eingeschaltet, wie es im einzelnen in DE-C-20 36 497 beschrieben ist. Ein zusätzlicher weiterer spannungsabhängiger Widerstand 7 ist parallel zur Auslöseeinrichtung 2 angeordnet, wobei seine Ansprechspannung so gewählt ist, daß sie oberhalb der des ersten spannungsabhängigen Widerstands 3 liegt.

Vorteilhafterweise ist parallel zur Auslöseeinrichtung 2 ein Kondensator 8 als Tiefpaß angeordnet, der die Störfestigkeit der Auslöseeinrichtung 2 erhöht und sie somit vor unerwünschten Fehlauslösungen verstärkt schützt.

Der allgemeine Aufbau von Fehlerstromschutzschalter, die netzspannungsunabhängig arbeiten, kann beispielsweise aus DE-C-20 36 497 oder aus EP-B1-0 106 045 ersehen werden.

## Patentansprüche

1. Fehlerstromschutzschalter mit einem Summenstromwandler, in dessen Sekundärkreis eine Auslöseeinrichtung (2) angeordnet ist, die mit einem Schaltschloß in Eingriffverbindung steht, das auf Schaltkontakte in zu überwachenden Leitungen einwirkt, wobei zur Vermeidung von überspannungsbedingten Fehlauslösungen infolge von überspannungsbedingten Stoßströmen die Auslöseeinrichtung (2) durch einen ersten spannungsabhängigen Widerstand (3) überbrückt ist, dessen Widerstand eine solche Charakteristik aufweist, daß oberhalb einer Schwelle, mit steigender Spannung sein Widerstand sinkt, daß insbesondere im Auslösekreis ein oder mehrere Kondensatoren angeordnet sind, die auf Leistungsanpassung oder Pulsstromsensitivität abgestimmt sind, wobei ein zusätzlicher weiterer spannungsabhängiger Widerstand (7) parallel zur Auslöseeinrichtung (2) eingeschaltet ist, dessen Ansprechspannung so gewählt ist, daß sie oberhalb der des ersten spannungsabhängigen Widerstands (3) liegt.

2. Fehlerstromschutzschalter nach Anspruch 1,
**dadurch gekennzeichnet,** daß der erste spannungsabhängige Widerstand (3) durch zwei antiparallele Dioden (4, 5) oder einen Varistor gebildet ist.

3. Fehlerstromschutzschalter nach Anspruch 1,
**dadurch gekennzeichnet,** daß parallel zur Auslöseeinrichtung (2) ein Kondensator (8) als Tiefpaß angeordnet ist.

4. Fehlerstromschutzschalter nach Anspruch 1,
**dadurch gekennzeichnet,** daß die Abstimmung auf Wechselstrom- und/oder Pulsstromsensitivität ausgelegt ist.

5. Fehlerstromschutzschalter nach Anspruch 1,
**dadurch gekennzeichnet,** daß der Auslöser ein Haltemagnet, ein Sperrmagnet oder ein Arbeitsrelais ist.
